# EUROPÄISCHE PATENTSCHRIFT

(11) **EP 0 608 245 B1**
(45) Veröffentlichungstag und Bekanntmachung des Hinweises auf die Patenterteilung: **09.10.1996**
(21) Anmeldenummer: 92917605.5
(22) Anmeldetag: 19.08.1992
(51) Int. Cl.: F15B 21/02, G05B 15/02, F15B 21/08, G05B 19/02

(54) **ELEKTRO-PNEUMATISCHE STEUEREINRICHTUNG**
ELECTRO-PNEUMATIC CONTROL DEVICE
DISPOSITIF DE COMMANDE ELECTROPNEUMATIQUE

(43) Veröffentlichungstag der Anmeldung: 03.08.1994
(73) Patentinhaber: Festo KG, D-73734 Esslingen (DE)
(72) Erfinder: HOHNER, Heinz, D-7300 Esslingen (DE)
(74) Vertreter: Abel, Martin, Dipl.-Ing.
(86) Internationale Anmeldenummer: DE9200703
(87) Internationale Veröffentlichungsnummer: WO9404831

(56) Entgegenhaltungen:
- EP-A- 0 333 057
- CH-A- 675 752
- DE-A- 3 800 399
- DE-C- 3 042 205
- US-A- 4 644 848

## Beschreibung

Die Erfindung betrifft eine elektro-pneumatische Steuereinrichtung, mit einer nach Art einer Baugruppe ausgebildeten Ventilstation, die einen mit einer Mehrzahl von Ventilen bestückten Fluidverteiler sowie elektrisch betätigbare Ventilantriebe enthält, und mit einer die elektrischen Betätigungssignale für die Ventilantriebe liefernden zentralen elektronischen Steuereinheit.

Steuereinrichtungen dieser Art finden sich schon seit längerem im Lieferprogramm der Anmelderin. Die baugruppenähnlichen Ventilstationen tragen dabei die Bezeichnung "Ventilinsel" oder "Installationsinsel" und umfassen einen plattenähnlichen Fluidverteiler, der mit Mehrwegeventilen bestückt ist. Die Betätigung dieser Mehrwegeventile erfolgt über elektrisch betätigbare Ventilantriebe, die regelmäßig von Elektromagneten oder Magnetventilen gebildet sind. Da die Ventilstation als einheitlich handhabbare Einheit ausgebildet ist, läßt sie sich günstig in unmittelbarer Nähe der zu steuernden Maschine anbringen, so daß sich kurze pneumatische Leitungswege zwischen den Mehrwegeventilen und den anzutreibenden Einrichtungen, beispielsweise Arbeitszylinder, ergeben. Die Betätigungssignale für die Ventilantriebe liefert eine zentrale elektronische Steuereinheit, die in einem Schaltschrank untergebracht ist, der an einer für den Bediener günstigen Stelle angeordnet ist. Der Signalübertragung dienen dabei entsprechende Kabel, die zwischen der zentralen Steuereinheit und der jeweiligen Ventilstation verlegt sind. Eine ähnliche Anordnung geht auch aus der DE 30 42 205 C2 hervor.

Die Installation der zentralen elektronischen Steuereinheit ist bisher sehr aufwendig und erfordert umfangreiche Verdrahtungen in einem Schaltschrank. Vor allem, wenn lediglich kleinere Automatisierungsaufgaben zu bewältigen sind, ist der notwendige Installationsaufwand unverhältnismäßig groß. Sofern nur kleinere Maschineneinheiten oder einzelne Maschinenstationen zu steuern sind, verwendet man deshalb bisher meist noch konventionelle Einrichtungen ohne Ventilstationen.

Es ist die Aufgabe der vorliegenden Erfindung, eine Steuereinrichtung der eingangs genannten Art zu schaffen, die eine Automatisierung auch kleinerer Anlagen oder Maschinenstationen mit verhältnismäßig geringem Aufwand ermöglicht.

Zur Lösung der Aufgabe ist vorgesehen, daß die zentrale Steuereinheit als Steuerblock ausgebildet ist, der einen unmittelbaren Bestandteil der baugruppenartigen Ventilstation bildet.

Auf diese Weise entfällt eine zentrale elektronische Steuereinheit, die separat steht und aufwendig mit den vorhandenen Ventilstationen zu verknüpfen ist. Vielmehr ist die zentrale elektronische Steuereinheit in einem kompakten Steuerblock zusammengefaßt, der einen mit der Ventilstation fest verbundenen Baustein darstellt und deshalb ein Baugruppenteil der Ventilstation bildet. Der Installationsort der Ventilstation ist also gleichzeitig der Installationsort der zentralen Steuereinheit. Verständlicherweise reduziert dies die notwendigen Verdrahtungen beträchtlich. Der Steuerblock kann einstückig in die Ventilstation integriert sein, kann jedoch auch so ausgebildet sein, daß er sich bei Bedarf von der Ventilstation abnehmen läßt. Letzteres ermöglicht einen raschen Austausch im Falle von Funktionsstörungen. Man kann nun auch kleineren Anlagen oder Maschinenstationen auf kostengünstige Weise eine kompakte Ventilstation zuordnen, die in sich die zentrale elektronische Steuereinheit vereinigt.

Vorteilhafte Weiterbildungen der Erfindung sind in den Unteransprüchen aufgeführt.

Der Steuerblock der Ventilstation kann ein elektronisches Festprogramm enthalten, das auf die Anzahl der bestückten Ventile und die zu lösenden Steuerungsaufgaben speziell abgestimmt ist. Eine derartige Lösung ist besonders kostengünstig. Einen variableren Einsatz läßt jedoch ein programmierbarer Steuerblock zu, der eine Anpassung des Steuerprogrammes vor Ort an die zu lösenden Steuerungsaufgaben ermöglicht.

Um die Programmierung zu ermöglichen, kann insbesondere an dem Steuerblock eine Schnittstelle vorgesehen sein, die den Anschluß eines Personalcomputers ermöglicht. Dieser gestattet eine einfache Programmierung, eine problemlose Inbetriebnahme im On-Line-Betrieb oder aber eine Dokumentation von Programmlisten oder dergleichen.

Zweckmäßigerweise verfügt der Steuerblock auch über eine Schnittstelle für den Anschluß eines Anzeige- und/oder Bediengerätes, die zweckmäßigerweise mit derjenigen für den Computer identisch ist. Sobald die Steuereinrichtung eingerichtet ist, läßt sich der Computer durch das Anzeige- und/oder Bediengerät ersetzen, über das nunmehr die Bedienung der Ventilstation erfolgt.

Es ist möglich, mehrere der erfindungsgemäßen Ventilstationen insbesondere über einen Feldbus zusammenzuschalten. Der Steuerblock einer dieser Ventilstationen kann in diesem Falle eine sogenannte Master-Steuereinheit bilden, die die übrigen Steuerblöcke beherrscht. Dennoch können die abhängigen Steuerblöcke jederzeit autark betrieben werden, insbesondere zu Wartungs-, Umrüst- und Instandhaltungszwecken.

Möglich ist es auch, steuerblocklose Ventilstationen an die mit dem Steuerblock ausgestattete Ventilstation anzuschließen, was wiederum zweckmäßigerweise über einen Feldbus erfolgt, wobei eine jeweilige der steuerblocklosen Ventilstationen mit einer Feldbus-Kommunikationseinheit ausgestattet ist. Wie im vorgenannten Falle liegt auch hier ein sogenannter Master vor, der abhängige Stationen, sogenannte Slaves, steuert. Bei kompaktem Aufbau der Steuereinrichtung lassen sich dadurch Automatisierungsaufgaben wirtschaftlich lösen.

Nachfolgend wird die Erfindung anhand der beiliegenden Zeichnung näher erläutert. In dieser zeigen:
- Figur 1: eine erste Bauform der Steuereinrichtung in perspektivischer Schemadarstellung, wobei u.a. eine mit einem Steuerblock ausgestattete Ventilstation gezeigt ist,
- Figur 2: eine Steuereinrichtung mit mehreren untereinander verknüpften, jeweils einen Steuerblock enthaltenden Ventilstationen, von denen eine die Haupt- bzw. Master-Funktion innehat, und
- Figur 3: eine weitere Ausgestaltung der Steuereinrichtung, wobei an eine mit einem Steuerblock ausgestattete Ventilstation mehrere steuerblocklose Ventilstationen angeschlossen sind.

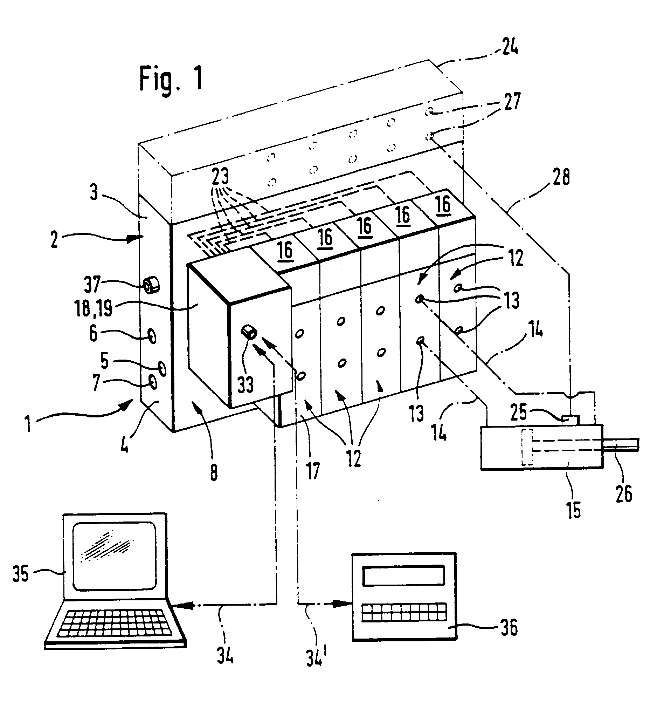

Die in Figur 1 gezeigte elektro-pneumatische Steuereinrichtung 1 verfügt über eine baugruppenähnliche Ventilstation 2. Letzere enthält eine Grundplatte 3, die u.a. einen Fluidverteiler 4 für ein Pneumatikmedium bildet. Man erkennt einen im Innern des Fluidverteilers 4 verlaufenden zentralen Speisekanal 5 sowie beispielsgemäß zwei zentrale Entlüftungskanäle 6, 7. Über diese erfolgt die Zufuhr und/oder Abfuhr des Druckmittels. Über nicht näher gezeigte Zweigkanäle münden die genannten Kanäle 5, 6, 7 an einer Bestückungsfläche 8 des Fludiverteilers 4 aus, wo letzterer mit einer Mehrzahl von als Mehrwegeventile ausgebildeten Ventilen 12 bestückt ist. Diese Ventile 12 kommunizieren über die genannten Zweigkanäle mit dem Speisekanal 5 und den Entlüftungskanälen 6, 7. An den Ventilen 12 vorgesehene Anschlußmittel 13 erlauben das Anschließen von Druckmittelleitungen 14, die zu druckmittelbetätigbaren Arbeitseinrichtungen 15 führen. Der besseren Übersichtlichkeit wegen ist in Figur 1 nur eine Arbeitseinrichtung 15 repräsentativ gezeigt, die von einem Arbeitszylinder gebildet ist. Durch geeignetes Schalten der Ventile 12 wird die Druckmittelversorgung der Arbeitseinrichtungen 15 gesteuert, so daß diese in der gewünschten Weise betätigt werden.

Um die Ventile in der gewünschten Weise schalten zu können, ist jedem von ihnen ein elektrisch betätigbarer Ventilantrieb 16 zugeordnet. Letzterer ist beispielsgemäß fest mit dem zugehörigen Ventil 12 verbunden und insbesondere an mindestens einer Stirnseite dessen Ventilgehäuses 17 befestigt. Auf diese Weise sind auch die Ventilantriebe 16 fest mit der Grundplatte 3 verbunden. Natürlich ist es auch möglich, die Ventilantriebe 16 alternativ oder zusätzlich über geeignete Befestigungsmittel insbesondere lösbar an der Grundplatte 3 festzulegen.

Die für die Betätigung der Ventilantriebe 16 notwendigen elektrischen Betätigungssignale liefert eine zentrale elektronische Steuereinheit 18, die vorzugsweise als Steuerblock 19 ausgebildet ist und einen Baugruppenteil der Ventilstation 2 bildet. Der Steuerblock 19 ist ein unmittelbarer Bestandteil oder Baustein der Ventilstation 2 und als solcher fest mit dieser verbunden. Bei einer Handhabung der Ventilstation 2, beispielsweise um sie an einer geeigneten Einsatzstelle zu installieren, wird somit der Steuerblock 19 automatisch in die Handhabung eingeschlossen. Es ist nicht notwendig, aufwendige Signalleitungen zwischen einer entfernt angeordneten zentralen Steuereinheit und der Ventilstation 2 zu verlegen, da die zentrale Steuereinheit 18 praktisch einen festen Bestandteil der Ventilstation 2 darstellt.

Es wäre zwar prinzipiell möglich, den Steuerblock 19 unmittelbar in die Ventilstation 2 und insbesondere in die Grundplatte 3 zu integrieren. Von Vorteil ist jedoch das gezeigte Ausführungsbeispiel, bei dem der Steuerblock 19 lösbar an der Grundplatte 3 befestigt ist, so daß er sich bei Bedarf, beispielsweise zur Behebung von Funktionsstörungen, problemlos abnehmen läßt.

Es ist von Vorteil, wenn auch der Steuerblock 19 auf der gleichen Bestückungsfläche 8 wie die Ventile 12 angeordnet ist. Beispielsgemäß sind die Ventile 12 batterieartig aufgereiht, wobei ihre Längsachsen rechtwinklig zur Reihenrichtung verlaufen, und wobei sich der Steuerblock 19 im Bereich einer Stirnseite der Ventilreihe befindet.

Die Ventilantriebe 16 werden elektrisch über Betätigungssignale betätigt, die der Steuerblock 19 liefert. Infolge der kompakten Zusammenfassung in einer einzigen Ventilstation ergeben sich dabei sehr kurze Signalwege. Da ferner die örtliche Zuordnung zwischen den Ventilantrieben 16 und dem Steuerblock 19 unveränderlich ist, können die schematisch gestrichelt angedeuteten und der Signalübertragung dienenden elektrischen Leiter 23 problemlos wie die Fluidkanäle in die Grundplatte 3 integriert sein. Die elektrischen Leiter 23 können hierbei Bestandteil einer Leiterplatte sein, es kann sich auch um einzelne Drähte handeln, die in eines oder mehrere Kabel integriert sein können. Man wird zweckmäßigerweise in der Grundplatte 3 einen geeigneten Hohlraum vorsehen, in dem sich die elektrischen Leiter 23 verlegen lassen. Es wäre möglich, den Anschluß der elektrischen Leiter 23 an den Steuerblock 19 und an die Ventilantriebe 16 über Steckeinrichtungen vorzunehmen. Letztere können so gestaltet sein, daß beim Bestücken der Grundplatte 3 mit den Ventilantrieben 16 und/oder mit dem Steuerblock 19 die erforderlichen elektrischen Verbindungen automatisch hergestellt werden.

In Figur 1 ist strichpunktiert eine Plattenerweiterung 24 gezeigt, die vorgesehen sein kann, wenn die Ventilstation 2 mit Überwachungseinrichtungen 25 zusammenarbeiten soll. Eine derartige Überwachungseinrichtung 25 ist beispielsgemäß als Sensor gezeigt, der an der Arbeitseinrichtung 15 angeordnet ist und in Abhängigkeit von der Stellung deren Abtriebsteiles 26 ein Signal verursacht. Dieses Signal wird dann über nicht näher gezeigte elektrische Leiter der Ventilstation 2 an den Steuerblock 19 und/oder an die Ventilantriebe 16 übermittelt. Der Steuerblock 19 kann damit bei der Ansteuerung der Ventilantriebe 16 den Betriebszustand der angeschlossenen Arbeitseinrichtungen 15 berücksichtigen. Beispielsgemäß sind mehrere Anschlußmittel 27 an der Plattenerweiterung 24 angedeutet, die das Anschließen von Signalübertragungsleitungen 28 ermöglichen, die von den Überwachungseinrichtungen 25 kommen.

Im betriebsbereiten Zustand ist in dem Steuerblock 19 ein Steuerungsprogramm enthalten, das die verschiedenen, für die Betätigung der Ventilantriebe 16 zu berücksichtigenden Parameter enthält. Es kann sich um ein herstellerseitig fest vorgegebenes Festprogramm handeln, das vom Anwender nicht geändert werden kann. Diese Lösung bietet sich für die Ansteuerung von Kleinstanlagen an. Wesentlich variabler ist allerdings die bei den Ausführungsbeispielen gewählte Variante, bei der der Steuerblock 19 programmierbar ist und mit einem variabel programmierbaren Steuerungsprogramm ausgestattet ist. Die Programmierung erfolgt an Ort und Stelle, insbesondere nachdem die Ventilstation am Einsatzort fest installiert ist und die notwendigen elektrischen und fluidischen Verbindungen hergestellt sind. Am Steuerblock 19 ist mindestens eine Schnittstelle 33 vorgesehen, an die sich über ein stichpunktiert angedeutetes Verbindungskabel 34 ein Computer 35 zumindest vorübergehend anschließen läßt. Bei letzterem kann es sich um einen handelsüblichen Personalcomputer handeln. Mit dem Computer 35 läßt sich die Software des Steuerblockes 19 anwenderspezifisch vor Ort programmieren und bei Bedarf eine Inbetriebnahme im On-Line-Betrieb vornehmen. Es wäre außerdem denkbar, den angeschlossenen Computer zur Aufzeichnung von Dokumentationen zu verwenden.

Nachdem der Steuerblock 19 in der gewünschten Weise programmiert ist, kann der Computer 35 entfernt werden, und die nunmehr frei gewordene Schnittstelle 33 läßt sich für den Anschluß eines Anzeige- und/oder Bediengerätes 36 verwenden. Das entsprechende Verbindungskabel ist bei 34' angedeutet. Die Bedienperson kann nun dem Steuerblock 19 sehr komfortabel die Befehle zukommen lassen die während des Betriebes notwendig sind.

Es versteht sich, daß dem Anzeige- und/oder Bediengerät bei Bedarf eine eigene Schnittstelle am Steuerblock 19 zugeordnet werden kann.

Die Steuereinrichtung 1 gemäß Figur 1 ist eine sogenannte Stand-Alone-Lösung, die sich für in sich geschlossene Abläufe eignet und für sich alleine arbeitet. Der Anschluß weiterer Ventilstationen 2 ist nicht vorgesehen. Lediglich eine Anschlußeinrichtung 37 ist noch vorgesehen, die die Zufuhr der Spannungsversorgung ermöglicht, und zwar insbesondere für die Schaltspannung der Antriebe und die Versorgungsspannung der Überwachungseinrichtungen 25.

Bei den Ventilantrieben 16 handelt es sich insbesondere um Einrichtungen mit Elektromagneten, die auch als Solenoide bezeichenbar sind. Beispielsgemäß sind die Ventilantriebe 16 als elektrisch betätigbare Magnetventile ausgebildet. Die Ventile 12 stellen hierbei praktisch Hauptventile dar, die von den Magnetventilen als Vorsteuerventile gesteuert werden können, und bei denen es sich zweckmäßigerweise um Mehrwegeventile handelt, beispielsweise 5/2-Wegeventile oder 5/3-Wegeventile.

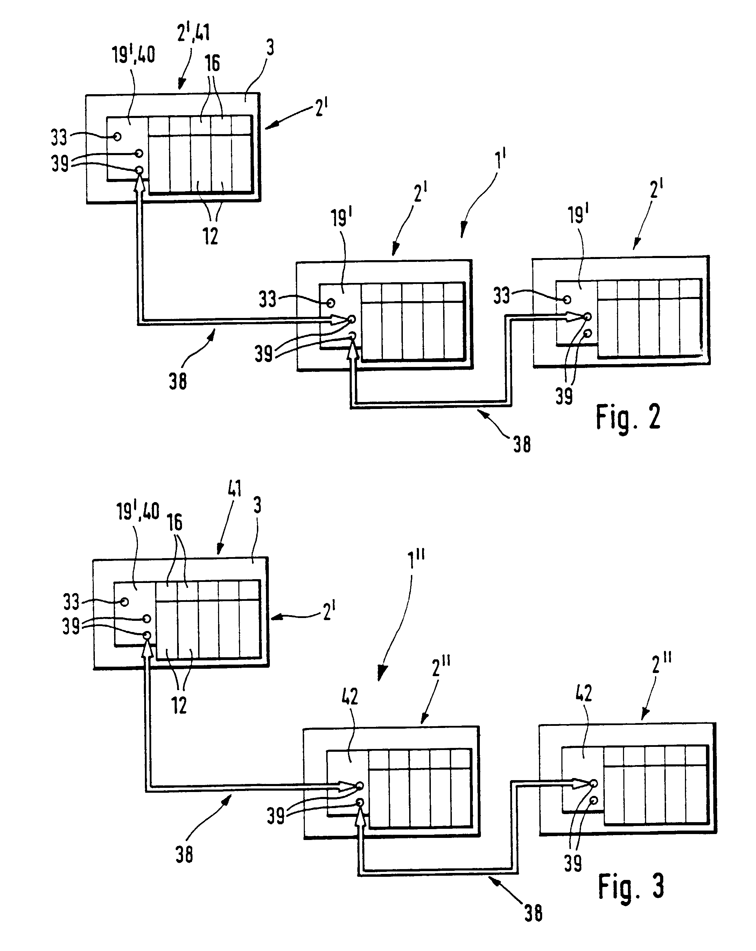

Eine gegenüber dem Ausführungsbeispiel der Figur 1 erweiterte Steuereinrichtung 1' ist in Figur 2 abgebildet. Sie setzt sich zusammen aus einer Mehrzahl von Ventilstationen 2', die - abgesehen von einer Modifikation des Steuerblockes 19' - der Ausführungsform der Ventilstation 2 gemäß Figur 1 entsprechen. Der modifizierte Steuerblock 19' ermöglicht es, die Ventilstation 2' an einen Feldbus 38 anzuschließen und auf diese Weise die erwähnte Mehrzahl von Ventilstationen 2' wirkungsmäßig miteinander zu koppeln. Jeder Steuerblock 19' besitzt eines oder mehrere Feldbus-Anschlußmittel 39, so daß beispielsweise eine Hintereinanderschaltung möglich ist. Der Feldbus 38 ist zweckmäßigerweise von einer Zwei-Draht-Leitung gebildet, die von Ventilstation zu Ventilstation verläuft. Die Anordnung ist dabei so getroffen, daß der Steuerblock einer Ventilstation 2' eine sogenannte Master-Steuereinheit 40 bildet, von der die über den Feldbus 38 angeschlossenen weiteren Ventilstationen 2' abhängig sind. Bei letzteren handelt es sich also um sogenannte Slaves, die jedoch als intelligente Slaves ausgebildet sind, da sie jeweils über einen eigenen Steuerblock 19' verfügen. Somit ergibt sich eine programmierbare Ventilstation 41 als Master, die die Master-Steuereinheit 40 enthält und die angekoppelten weiteren Ventilstationen 2' steuert und überwacht. Von diesen abhängigen Ventilstationen 2' hat jede ihren eigenen Steuerblock 19', so daß sie unabhängig von den anderen Slaves arbeiten können. Jeder Steuerblock 19' läßt sich unabhängig von den anderen Steuerblöcken programmieren.

Eine weitere Variante stellt die Steuereinrichtung 1'' gemäß Figur 3 dar. Hier ist wiederum eine Ventilstation 2' der in Figur 2 gezeigten Art vorhanden, deren Steuerblock 19' als Master-Steuerblock 40 ausgebildet ist, so daß die Ventilstation 2' selbst eine Haupt- bzw. Master-Ventilstation 41 bildet. An die Feldbus-Anschlußmitel 39 der Master-Steuereinheit 40 ist ein Feldbus 38 angeschlossen, über den mehrere weitere Ventilstationen angeschlossen sind, bei denen es sich um steuerblocklose Ventilstationen 2'' handelt. Anstelle eines Steuerblockes verfügt jede dieser abhängigen Ventilstationen 2'' über eine Feldbus-Kommunikationseinheit 42, mit der sie an besagten Feldbus 38 und über diesen an die Master-Steuereinheit 40 der Master-Ventilstation 41 angeschlossen ist. Bei den Ventilstationen 2'' handelt es sich also lediglich um Befehlsempfänger, die keine eigene Intelligenz oder Steuereinrichtung enthalten, weshalb Programmieranschlüsse nicht notwendig sind und lediglich Feldbus-Anschlußmitel 39 vorliegen. Auch hier steuert und überwacht die Master-Ventilstation 41 wie beim Ausführungsbeispiel gemäß Figur 2 als übergeordnete Ventilstation die angeschlossenen abhängigen Ventilstationen. Dies ist eine sehr wirtschaftliche Lösung für insbesondere solche Automatisierungsaufgaben, in denen Arbeitseinrichtungen 15 und Überwachungseinrichtungen 25 einer gemeinsamen Maschinenstation oder Bearbeitungseinheit zugeordnet sind.

In allen Fällen ergibt sich ein modularer Aufbau einer aus Ventilstationen bestehenden Einrichtung. Bei den sogenannten Slaves kann es sich außer um Ventilstationen auch um sonstige Arbeitsstationen handeln, beispielsweise um Einrichtungen mit dezentralen Ein- und Ausgängen, über die sich elektrisch betätigbare Arbeitseinrichtungen 15 betätigen lassen, z.B. Schütze. Es versteht sich, daß man als von einer Master-Ventilstation 41 abhängige Slaves gleichzeitig Ventilstationen mit (2') oder ohne (2'') Steuerblock vorsehen kann.

Die Anzahl der von einer Master-Ventilstation 41 abhängigen Ventilstationen kann bedarfsgemäß variieren, wobei sich eine Anzahl von ein bis vier Stück als optimal herausgestellt hat.

Abgesehen von ihren Unterschieden hinsichtlich des Steuerblockes und der Feldbus-Kommunikationseinheit, können die Ventilstationen 2', 2'' der Figuren 2 und 3 hinsichtlich ihres Aufbaues demjenigen der Ventilstation 2 aus Figur 1 entsprechen.

Es versteht sich, daß die Betätigungssignale der Steuerblöcke auch optisch übermittelt werden können.

## Patentansprüche

1. Elektro-pneumatische Steuereinrichtung, mit einer nach Art einer Baugruppe ausgebildeten Ventilstation (2, 2'), die einen mit einer Mehrzahl von Ventilen (12) bestückten Fluidverteiler (4) sowie elektrisch betätigbare Ventilantriebe (16) enthält, und mit einer die elektrischen Betätigungssignale für die Ventilantriebe (16) liefernden zentralen elektronischen Steuereinheit (19, 19'), dadurch gekennzeichnet, daß die zentrale Steuereinheit als Steuerblock (19, 19') ausgebildet ist, der einen unmittelbaren Bestandteil der baugruppenartigen Ventilstation (2, 2') bildet.

2. Steuereinrichtung nach Anspruch 1, dadurch gekennzeichnet, daß der Steuerblock (19, 19') als von der Ventilstation (2, 2'') abnehmbares Baugruppenteil ausgebildet ist.

3. Steuereinrichtung nach Anspruch 1 oder 2, dadurch gekennzeichnet, daß der Steuerblock (19, 19') programmierbar ist.

4. Steuereinrichtung nach einem der Ansprüche 1 bis 3, dadurch gekennzeichnet, daß die Ventilstation (2, 2') insbesondere an dem Steuerblock (19, 19') mindestens eine Schnittstelle (33) für die Verbindung zu einem Computer (35) besitzt.

5. Steuereinrichtung nach Anspruch 4, dadurch gekennzeichnet, daß eine Schnittstelle (33) den Anschluß eines Anzeige- und/oder Bediengerätes (36) ermöglicht.

6. Steuereinrichtung nach einem der Ansprüche 1 bis 5, dadurch gekennzeichnet, daß an den Steuerblock (19', 40) der Ventilstation (2') ein Feldbus (38) anschließbar ist, der die Ankopplung weiterer, insbesondere als Ventilstationen (2', 2'') ausgebildeter Arbeitsstationen ermöglicht.

7. Steuereinrichtung nach Anspruch 6, dadurch gekennzeichnet, daß der Steuerblock (19', 40) einer Ventilstation (2') eine Master-Steuereinheit (40) bildet, von der die über den Feldbus (38) angeschlossenen weiteren Arbeitsstationen (2', 2'') abhängig sind.

8. Steuereinrichtung nach Anspruch 7, dadurch gekennzeichnet, daß mindestens eine weitere Arbeitsstation als Ventilstation (2') ausgebildet ist, deren Steuerblock (19') über den Feldbus (38) mit der Master-Steuereinheit (40) verbunden ist.

9. Steuereinrichtung nach Anspruch 7 oder 8, dadurch gekennzeichnet, daß mindestens eine weitere Arbeitsstation als steuerblocklose Ventilstation (2'') ausgebildet ist, die eine Feldbus-Kommunikationseinheit (42) besitzt, die über den Feldbus (38) an den Steuerblock (19') einer anderen Ventilinsel (2') angeschlossen ist.

10. Steuereinrichtung nach einem der Ansprüche 1 bis 9, dadurch gekennzeichnet, daß mindestens eine Ventilstation (2, 2', 2'') Mittel (23) zur Übertragung von elektrischen Betätigungssignalen zwischen ihrem Steuerblock (19, 19') oder ihrer Feldbus-Kommunikationseinheit (42) und ihren Ventilantrieben (16) enthält.

11. Steuereinrichtung nach einem der Ansprüche 1 bis 10, dadurch gekennzeichnet, daß mindestens eine Ventilstation (2) Anschlußmittel (27) für Überwachungseinrichtungen (25) wie Sensoren enthält, die mit dem Steuerblock (19) kommunizieren.

12. Steuereinrichtung nach einem der Ansprüche 1 bis 11, dadurch gekennzeichnet, daß der Steuerblock (19, 19') an einer Grundplatte (3) der Ventilstation (2, 2') befestigt ist, die mit dem Fluidverteiler (4) fest verbunden ist oder diesen bildet.

## Claims

1. Electropneumatic control device with a valve station (2, 2') in the form of an assembly incorporating a fluid distributor (4) fitted with a plurality of valves (12) and electrically actuable valve drives (16) and with a central electronic control unit (19, 19') providing the electrical actuating signals for the valve drives (16), characterized in that the central control unit is designed as a control block (19, 19') forming an integral part of the assembly-like valve station (2, 2').

2. Control device according to Claim 1, characterized in that the control block (19, 19') is designed as a sub-assembly which is detachable from the valve station (2, 2").

3. Control device according to Claim 1 or 2, characterized in that the control block (19, 19') is programmable.

4. Control device according to any of Claims 1 to 3, characterized in that the valve station (2, 2') has at least one interface (33) for connection to a computer (35) in particular on the control block (19, 19').

5. Control device according to Claim 4, characterized in that an interface (33) enables a display and/or operator control device (36) to be connected.

6. Control device according to any of Claims 1 to 5, characterized in that a field bus (38) enabling further work stations, in particular designed as valve stations (2', 2"), to be connected can be connected to the control block (19' 40) of the valve station (2').

7. Control device according to Claim 6, characterized in that the control block (19' 40) of a valve station (2') forms a master control unit (40) on which the further work stations (2', 2") connected via the field bus (38) depend.

8. Control device according to Claim 7, characterized in that at least one further work station is designed as a valve station (2') the control block (19') of which is connected to the master control unit (40) via the field bus (38).

9. Control device according to Claim 7 or 8, characterized in that at least one further work station is designed as a valve station (2") without control block, provided with a field bus communication unit (42) connected to the control block (19') of another valve package (2') via the field bus (38).

10. Control device according to any of Claims 1 to 9, characterized in that at least one valve station (2, 2', 2") is provided with means (23) for the transmission of electric actuating signals between its control block (19, 19') or its field bus communication unit (42) and its valve drives (16).

11. Control device according to any of Claims 1 to 10, characterized in that at least one valve station (2) is provided with connecting means (27) for monitoring devices (25) such as sensors, which communicate with the control block (19).

12. Control device according to any of Claims 1 to 11, characterized in that the control block (19, 19') is mounted on a base plate (3) of the valve station (2, 2'), which is permanently connected to or forms the fluid distributor (4).

## Revendications

1. Dispositif de commande électropneumatique, comprenant un poste à soupapes (2, 2') conformé à la manière d'un composant, poste qui contient un distributeur de fluide (4) équipé d'une pluralité de soupapes (12) ainsi que des mécanismes de soupape (16) actionnés électriquement, et comprenant une unité de commande électronique centrale (19, 19') délivrant les signaux d'actionnement électriques pour les mécanismes de soupape (16), caractérisé en ce que l'unité de commande électronique centrale est conformée en bloc de commande (19, 19') qui forme un composant direct du poste à soupapes (2, 2') de type composant.

2. Dispositif de commande selon la revendication 1, caractérisé en ce que le bloc de commande (19, 19') est conformé en partie de composant extractible du poste à soupapes (2, 2").

3. Dispositif de commande selon la revendication 1 ou 2, caractérisé en ce que le bloc de commande (19, 19') est programmable.

4. Dispositif de commande selon l'une des revendications 1 à 3, caractérisé en ce que le poste à soupapes (2, 2') possède, en particulier sur le bloc de commande (19, 19'), au moins une interface (33) pour la liaison à un ordinateur (35).

5. Dispositif de commande selon la revendication 4, caractérisé en ce qu'une interface (33) permet le raccordement d'un appareil d'affichage et/ou de commande (36).

6. Dispositif de commande selon l'une des revendications 1 à 5, caractérisé en ce que sur le bloc de commande (19', 40) du poste à soupapes (2') se raccorde un bus de zone (38), qui permet l'accouplement d'autres postes de travail, en particulier conformés en postes à soupapes (2, 2').

7. Dispositif de commande selon la revendication 6, caractérisé en ce que le bloc de commande (19', 40) d'un poste à soupapes (2') forme une unité de commande maîtresse (40), de laquelle dépendent les autres postes de travail (2', 2") raccordés au bus de zone (38).

8. Dispositif de commande selon la revendication 7, caractérisé en ce qu'au moins un autre poste de travail est conformé en poste à soupapes (2'), dont le bloc de commande (19') est relié par l'intermédiaire du bus de zone (38) à l'unité de commande maîtresse (40).

9. Dispositif de commande selon la revendication 7 ou 8, caractérisé en ce qu'au moins un autre poste de travail est conformé en poste à soupapes (2") sans bloc de commande, poste qui possède un unité de communication à bus de zone (42) qui est raccordée par l'intermédiaire du bus de zone (38) au bloc de commande (19') d'un autre poste à soupapes (2').

10. Dispositif de commande selon l'une des revendications 1 à 9, caractérisé en ce qu'au moins un poste à soupapes (2, 2', 2") contient des moyens (23) de transmission de signaux électriques d'actionnement entre son bloc de commande (19, 19') ou son unité de communication à bus de zone (42) et ses mécanismes de soupape (16).

11. Dispositif de commande selon l'une des revendications 1 à 10, caractérisé en ce qu'au moins un poste à soupapes (2) contient des moyens de raccordement (27) pour des dispositifs de surveillance (25) tels que des capteurs, qui communiquent avec le bloc de commande (19).

12. Dispositif de commande selon l'une des revendications 1 à 11, caractérisé en ce que le bloc de commande (19, 19') est fixé à une plaque de base (3) du poste à soupapes (2, 2'), laquelle est reliée fixement au distributeur de fluide (4) ou forme elle-même celui-ci.
